# FASCICULE DE BREVET EUROPEEN

(11) **EP 2 152 531 B1**
(45) Date de publication et mention de la délivrance du brevet: **06.07.2011**
(21) Numéro de dépôt: 08805552.0
(22) Date de dépôt: 07.05.2008
(51) Int. Cl.: B60G 17/06, F16F 9/54

(54) **BUTÉE DE SUSPENSION A ÉLÉMENT FILTRANT ET JAMBE DE SUSPENSION COMPORTANT UNE TELLE BUTÉE**
AUFHÄNGUNGSSCHUBLAGER MIT FILTERELEMENT UND AUFHÄNGUNGSSTREBE MIT EINEM SOLCHEN SCHUBLAGER
SUSPENSION THRUST BEARING WITH FILTERING ELEMENT, AND SUSPENSION STRUT COMPRISING SUCH A THRUST BEARING

(30) Priorité: 09.05.2007 FR 0754929; 27.11.2007 FR 0759343
(43) Date de publication de la demande: 17.02.2010
(73) Titulaire: S.N.R. ROULEMENTS, 74000 Annecy (FR)
(72) Inventeur: MERMOUD, Gérard, F-74330 LA Balme de Sillingy (FR); SAUNIER, Ludovic, F-74540 Saint Felix (FR); LENON, Hervé, F-74540 Gruffy (FR)
(74) Mandataire: Novagraaf Technologies
(86) Numéro de dépôt international: PCT/FR2008/000647
(87) Numéro de publication internationale: WO 2008/152241

(56) Documents cités:
- EP-A- 0 296 960
- EP-A- 1 559 595
- EP-A- 1 609 632
- DE-A1- 19 719 301
- DE-B3- 10 359 638
- FR-A- 2 866 401
- FR-A- 2 899 154
- US-B1- 6 182 953

## Description

### DOMAINE TECHNIQUE DE L'INVENTION

La présente invention se rapporte au domaine des butées de jambe de suspension pour véhicules, par exemple pour véhicules automobiles, et porte, plus particulièrement, sur les éléments destinés à filtrer les vibrations transmises par le ressort de suspension.

### ETAT DE LA TECHNIQUE ANTERIEURE

De manière connue, une jambe de suspension comporte un ressort à boudin entourant un amortisseur télescopique et, optionnellement, un tampon amortisseur de fin de course de l'amortisseur télescopique, ces éléments étant disposés entre une roue et un élément de la superstructure du véhicule, qui peut être suivant les cas un élément de la caisse ou du châssis. La butée de suspension est interposée entre cet élément de la superstructure et le ressort de suspension, et a pour rôle principal de transmettre les efforts axiaux et radiaux exercés par le ressort de suspension. Optionnellement, la butée peut également transmettre les efforts exercés par le tampon amortisseur et/ou l'amortisseur télescopique.

Classiquement, une telle butée de suspension se compose d'un roulement interposé entre une pièce d'appui inférieure, un capot supérieur. Le roulement, formé d'une rondelle inférieure et d'une rondelle supérieure entre lesquelles sont placés des corps roulants, est destiné à transmettre les efforts axiaux et radiaux mentionnés ci-dessus tout en autorisant une certaine rotation entre le ressort de suspension et la caisse du véhicule. La pièce d'appui a pour fonction d'assurer la liaison entre le roulement et le ressort et, le cas échéant, entre le roulement et le tampon amortisseur. Elle comporte généralement au moins un élément de support ainsi qu'une coupelle rigide optionnelle, et présente une surface de contact avec le roulement. Réalisé préférentiellement dans un matériau plastique ou composite, éventuellement pourvu d'un insert métallique, l'élément de support présente une surface d'appui pour une spire terminale du ressort de suspension.

Il est connu, par exemple par les documents FR2803561 ou FR2793732 ou EP-A-1 609 632, qui comporte les caractéristiques du préambule de la revendication 1, d'intercaler entre l'élément de support et le ressort de suspension un élément filtrant réalisé dans un matériau élastomère et destiné à filtrer les vibrations transmises par le ressort de suspension. Selon ces documents, l'élément filtrant est réalisé par co-moulage ou surmoulage d'une semelle d'un matériau élastomère sur la surface de l'élément de support destiné à venir au contact du ressort de suspension. De telles solutions, toutefois, n'apportent qu'une liaison de type surfacique, résultant de l'accrochage physico-chimique lié au procédé de surmoulage ou de co-moulage, entre l'élément filtrant et la pièce sur laquelle il est déposé. Il en résulte que la cohésion entre ces deux éléments peut se dégrader dans le temps, sous l'effet du vieillissement des matériaux les constituant. Or un défaut de cohésion dans la liaison entre l'élément filtrant et l'élément de support aura pour conséquence un risque de fluage et de migration de l'un ou l'autre des matériaux les constituant, entraînant un déplacement relatif de ces pièces et une perte des performances de filtrage des vibrations à la caisse, via la butée de suspension puis une destruction progressive de la butée.

### EXPOSE DE L'INVENTION

L'invention vise donc à remédier aux inconvénients de l'état de la technique, de manière à proposer une butée de suspension dans laquelle la liaison entre l'élément filtrant et l'élément de support soit durable.

Dans ce but, l'invention a pour objet une butée pour une jambe de suspension pourvue d'un ressort à boudin, la butée comportant un palier comprenant au moins une rondelle inférieure et une rondelle supérieure, et une pièce d'appui comportant un élément de support en contact avec la rondelle inférieure pour transmettre à la rondelle inférieure les efforts exercés par le ressort à boudin, et un élément filtrant en matériau élastomère, interposé entre le ressort et l'élément de support, l'élément de support comportant au moins une rainure longiligne s'ouvrant à partir d'une surface de l'élément de support vers l'intérieur de l'élément de support, la rainure ayant une extrémité longitudinale ouverte et ayant en coupe transversale des parois latérales s'évasant à partir de la surface de l'élément de support vers le fond de la rainure, l'élément filtrant étant en contact avec la surface du support et comportant au moins un relief remplissant la rainure de l'élément de support en assurant un verrouillage mutuel positif entre l'élément filtrant sur l'élément de support.

On entend ici par élastomère aussi bien un élastomère de synthèse qu'un caoutchouc naturel. La solidarisation obtenue par l'emboîtement entre élément filtrant et élément de support au niveau de la rainure assure une cohésion mécanique qui minimise les risques de fluage et de migration de l'élément filtrant dans le temps. Il est aisé d'injecter la matière constitutive de l'élément filtrant dans les logements de l'élément de support puis d'obtenir une solidification par polymérisation ou refroidissement. L'ouverture à l'extrémité longitudinale de la rainure constitue quant à elle l'orifice de sortie d'une broche utilisée pour former la rainure lors de la fabrication de l'élément de support par moulage.

Selon un mode de réalisation particulier de l'invention, la rainure a en coupe transversale un profil en queue d'aronde.

Avantageusement, l'élément de support est en matériau plastique ou composite.

De manière préférentielle, l'élément de support comporte une pluralité de rainures longilignes parallèles s'ouvrant à partir d'une surface de l'élément de support vers l'intérieur de l'élément de support, chaque rainure ayant une extrémité longitudinale ouverte et ayant en coupe transversale des parois latérales s'évasant à partir de la surface de l'élément de support vers l'intérieur de l'élément de support, l'élément filtrant étant en contact avec la surface du support et comportant une pluralité de reliefs remplissant la pluralité de rainures de l'élément de support en assurant un verrouillage mutuel positif entre l'élément filtrant sur l'élément de support.

La surface de l'élément de support peut être plane ou cylindrique.

Selon un mode de réalisation, la butée comporte en outre un capot supérieur en appui sur la rondelle supérieure et formant avec l'élément de support une cavité de logement et de maintien du roulement. Le capot supérieur, interposé entre la rondelle supérieure et la superstructure du véhicule permet notamment de protéger le roulement des agressions extérieures. De manière particulièrement avantageuse, la butée peut comporter en outre une lèvre annulaire faisant saillie dans la cavité, constituée dans la matière de l'élément filtrant et reliée à l'élément filtrant par au moins un pont de matière remplissant un orifice traversant l'élément de support et débouchant dans la cavité ; l'élément de support peut être pourvu d'au moins un orifice traversant débouchant dans la cavité.

La lèvre assure une barrière s'opposant à l'intrusion de polluants dans la cavité, les ponts de matière contribuant quant à eux à la cohésion mécanique entre l'élément de support et l'élément filtrant. Selon un mode de réalisation, la lèvre peut venir en contact, voire en appui sur le capot supérieur avec une double fonction : former des lèvres d'étanchéité et introduire un léger couple de frottement entre le capot et la pièce d'appui.

Dans une variante particulièrement efficace, la cavité comporte une perte de charge d'entrée et l'appendice vient au contact du capot dans la perte de charge d'entrée.

Avantageusement, l'élément filtrant d'une butée de suspension selon l'invention est réalisé par injection d'une matière élastomère approprié dans un moule dans lequel l'élément de support a préalablement été positionné.

Le palier peut avantageusement constituer un palier à roulement, des corps roulants étant disposés entre les rondelles. Toutefois, l'invention s'applique également à une butée à palier lisse.

Suivant un mode de réalisation, l'élément filtrant comporte un prolongement axial en accordéon constituant une manche de protection d'un amortisseur télescopique de la jambe de suspension.

L'invention a également trait à une jambe télescopique pourvue d'une butée telle que décrit ci-dessus.

L'invention s'étend également à un procédé de fabrication d'une butée de suspension telle que décrite ci-dessus, ce procédé comportant au moins une étape de fabrication de l'élément de support dans un matériau plastique ou composite, une étape de mise en place au moins partielle de l'élément de support dans un moule d'injection, une étape d'injection dans le moule de la matière constituant l'élément filtrant, une étape de durcissement de l'élément filtrant dans le moule de manière à réaliser le verrouillage mutuel par imbrication entre l'élément filtrant et l'élément de support et une étape de démoulage de l'ensemble constitué par l'élément de support et l'élément filtrant. Avantageusement, l'étape de fabrication de l'élément de support comporte une étape d'injection d'une matière plastique dans un moule comportant au moins un tiroir pourvu d'au moins une broche de section trapézoïdale de manière à former au moins une rainure en queue d'aronde suivie d'une étape de démoulage incluant une étape d'extraction du tiroir.

### BREVE DESCRIPTION DES FIGURES

D'autres avantages et caractéristiques ressortiront de la description qui suit de modes particuliers de réalisation de l'invention, donnés à titre d'exemple non limitatif, en référence aux figures dans lesquelles :
- la figure 1 est une vue en coupe, selon un plan sensiblement axial, d'un premier mode de réalisation particulier d'une butée de suspension selon l'invention ;
- la figure 2 est une vue rapprochée d'un détail de la figure 1 ;
- la figure 3 est une vue en perspective d'un élément filtrant de la butée de suspension de la figure 1 ;
- la figure 4 est une vue en perspective d'un élément de support de la butée de suspension de la figure 1 ;
- la figure 5 est une vue en coupe, selon un plan sensiblement axial, d'un élément de support selon un deuxième mode de réalisation particulier de l'invention,
- la figure 6 est une vue rapprochée d'un détail de la figure 5 ;
- la figure 7 est une vue en perspective de l'élément de support de la figure 5 ;
- la figure 8 est une vue rapprochée d'un détail de la figure 6 ;
- la figure 9 représente une vue en coupe, selon un plan sensiblement axial, d'un troisième mode de réalisation particulier d'une butée de suspension selon l'invention ;
- la figure 10 représente une vue en coupe selon un plan sensiblement axial, d'une variante de réalisation de la figure 9.

### DESCRIPTION DETAILLEE DE DIFFERENTS MODES DE REALISATION

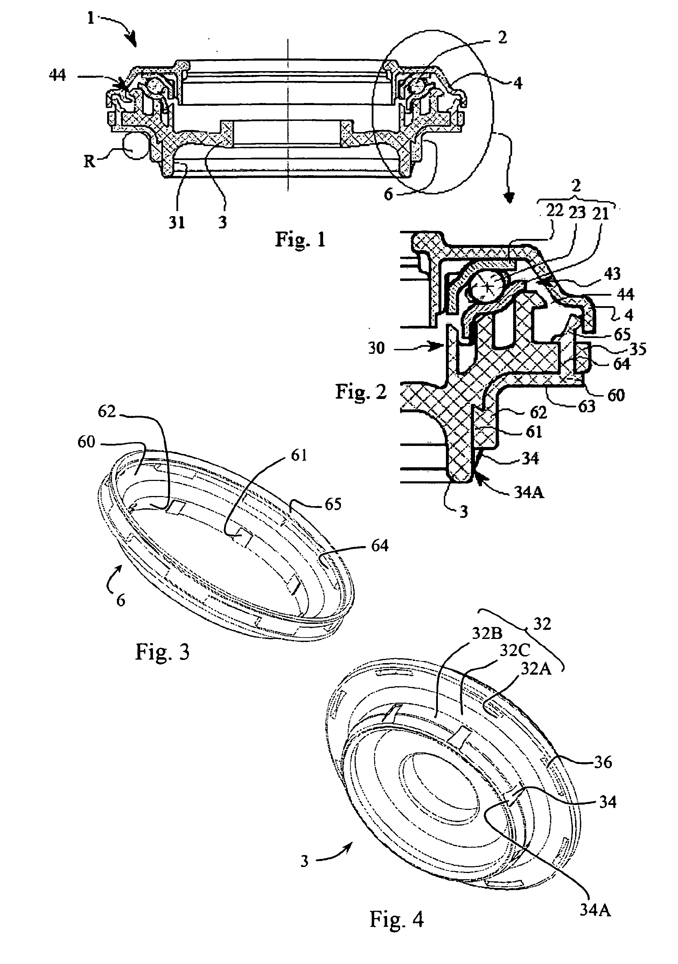

La butée de suspension 1 représentée sur les figures 1 à 4 comporte un roulement 2, un élément de support 3 réalisé dans un matériau plastique ou composite rigide, un capot supérieur 4 et un élément filtrant 6 réalisé dans un matériau élastomère, l'expression étant ici utilisée au sens large, et incluant le caoutchouc naturel.

Le roulement 2 est constitué d'une rondelle inférieure 21 et d'une rondelle supérieure 22 entre lesquelles sont placés des corps roulants 23. Les rondelles 21, 22 sont réalisées par exemple par emboutissage d'une tôle. Le capot et l'élément de support forment ensemble une cavité 43 de logement du roulement 2, la rondelle supérieure 22 étant en appui direct avec le capot alors que la rondelle inférieure 21 est en appui direct sur l'élément de support 3.

Il n'existe préférentiellement aucun contact mécanique direct entre l'élément de support 3 et le capot 4, un tel contact risquant d'induire des frottements et une transmission des vibrations dommageables pour les performances de la butée 1. L'élément de support 3 forme avec le capot supérieur 4 une perte de charge 44 à l'entrée de la cavité 43, protégeant le roulement 2 vis-à-vis d'éventuelles projections.

L'élément de support 3 comporte au moins une région 30 sur une partie de laquelle la rondelle inférieure 21 du roulement 2 est en appui, une surface 31 d'arrêt et de confinement d'un tampon amortisseur non représenté, et une surface de contact 32 avec l'élément filtrant 6, cette surface étant composée d'une face plane annulaire 32A, d'une face essentiellement cylindrique 32B et d'une zone de raccord 32C.

L'élément filtrant 6 comporte une semelle 60 placée entre la surface de contact 32 de l'élément de support 3 et un ressort de suspension R, la semelle 60 formant au moins une surface d'appui 63 d'une spire terminale du ressort de suspension R. La semelle 60 se raccorde à une partie en forme de manchon 62 de l'élément filtrant 6, enserrant la face cylindrique 32B de l'élément de support.

Les efforts exercés par le ressort de suspension R sont transmis au roulement 2 par l'élément de support 3 via la semelle 60 de l'élément filtrant, dont l'épaisseur permet la filtration des vibrations du ressort de suspension R. Les efforts exercés par les autres éléments de la suspension (non représentés, par exemple, et de manière non limitative, les efforts exercés par le tampon amortisseur) sont transmis au roulement 2 par l'élément de support 3.

Le support 3 présente, à partir de sa face cylindrique 32B de contact avec l'élément filtrant 6, des rainures 34 qui s'étendent parallèlement à l'axe géométrique de symétrie de la face cylindrique 32B. Ces rainures ont un profil s'évasant depuis la surface extérieure 32B vers l'intérieur de l'élément de support 3, et de préférence un profil en queue d'aronde. Comme il sera discuté plus en détail ci-dessous, les rainures sont ouvertes à leur extrémité inférieure 34A.

L'élément filtrant comporte quant à lui des nervures protubérantes 61 de géométrie complémentaire aux rainures 34, d'épaisseur croissante vers leur extrémité libre. L'imbrication des nervures 61 et des rainures 34 permet une fixation positive de l'élément filtrant 6 sur l'élément de support 3, qui empêche toute désolidarisation des éléments une fois assemblés.

Par ailleurs, l'élément filtrant 6 est pourvu de moyens contribuant à assurer la protection de la cavité 43 contre les projections de boue. À cette fin, une partie 32A de l'élément de support 3, située au voisinage de la perte de charge d'entrée 44 de la cavité 43, comporte au moins un, et de préférence une pluralité d'orifices traversants 36 répartis circulairement autour de l'axe de la butée, ces orifices 36 débouchant d'une part sur la face 32A de contact entre l'élément de support 3 et l'élément filtrant 6, et, d'autre part à l'intérieur de la cavité 43, au voisinage de la perte de charge d'entrée 44.

L'élément filtrant est pourvu d'une lèvre 65 annulaire faisant saillie à l'intérieur de la cavité 43 au voisinage de la perte de charge 44, et reliée à la semelle 60 par des colonnes 64 traversant les orifices 36. Avantageusement, la lèvre 65 de l'élément filtrant 6 vient au contact, voire en appui contre le capot supérieur 4. La lèvre 65 délimite ainsi une chambre intermédiaire supplémentaire à l'entrée de la perte de charge 44 et forme une barrière supplémentaire améliorant encore la protection du roulement 2. L'élément filtrant 6 étant réalisé dans un matériau élastomère approprié, l'existence d'un contact mécanique entre la lèvre 65 et le capot 4 n'est ici pas dommageable au regard des performances de la butée 1.

L'invention permet ainsi de réaliser une liaison simple et durable entre l'élément de support 3 et l'élément filtrant 6 de la butée de suspension 1, tout en offrant un moyen simple d'amélioration de l'étanchéité de la cavité 43 abritant le roulement 2 de la butée 1. Elle permet d'assurer le maintien des positions de l'élément de support 3 et de l'élément filtrant 6 l'un relativement à l'autre, relativement au ressort de suspension R, et relativement au capot supérieur 4 et à la cavité 43 abritant le roulement 2, ayant pour conséquence un maintien durable, d'une part des performances de filtration de l'élément filtrant 6 et, d'autre part, de la qualité de l'étanchéité de la cavité 43 et de la protection du roulement 2 qui en découle.

Pour assembler l'élément de support et l'élément filtrant, on procède de préférence de la manière suivante dans une première étape, l'élément de support 3 est réalisé, par des moyens connus dans l'état de la technique, dans un matériau plastique ou composite, par exemple et de manière non limitative un matériau composite à base de polyamide chargé de fibres de verre. Les rainures 34 débouchant sur le rebord périphérique de l'élément de support 3, il est très facile de les obtenir par l'insertion dans le moule d'un tiroir pourvu de broches de section trapézoïdale correspondant à la forme en queue d'aronde des rainures, tiroir qui est retiré par un mouvement rectiligne parallèle aux rainures 34. L'utilisation de broches est rendue nécessaire du fait de la forme recherchée pour les rainures, et explique qu'à la sortie du moule, les rainures 34 soient ouvertes à leur extrémité 34A.

Dans une deuxième étape, l'élément de support ainsi réalisé est positionné au sein d'un moule apte à recevoir l'injection d'une matière élastomère, de telle manière que la surface 32 de contact entre l'élément de support 3 et l'élément filtrant 6 délimite avec les parois du moule une cavité d'injection complexe, qui inclut les volumes nécessaires à la réalisation de la lèvre 65. Dans une troisième étape, la matière élastomère constituant l'élément filtrant 6 est injectée dans le moule défini ci-dessus. La matière envahit l'ensemble de l'espace disponible. Elle forme à l'intérieur des rainures 34 les nervures 61. Elle envahit et traverse également les orifices 36 pour former les colonnes 62 et la lèvre 65. Enfin, dans une quatrième étape, la pièce d'appui formée par l'élément de support 3 et l'élément filtrant 6 est démoulée.

Le procédé selon l'invention permet ainsi de réaliser une liaison mécanique du type à tenon et mortaise entre les rainures et les nervures en queue d'aronde, liaison qui se trouve renforcée par un accrochage physico-chimique à l'interface entre l'élément de support 3 et l'élément filtrant 6. Il permet également un positionnement précis et reproductible de la lèvre 65 évoquée ci-dessus au travers des orifices 36, et donc par rapport à la perte de charge 44.

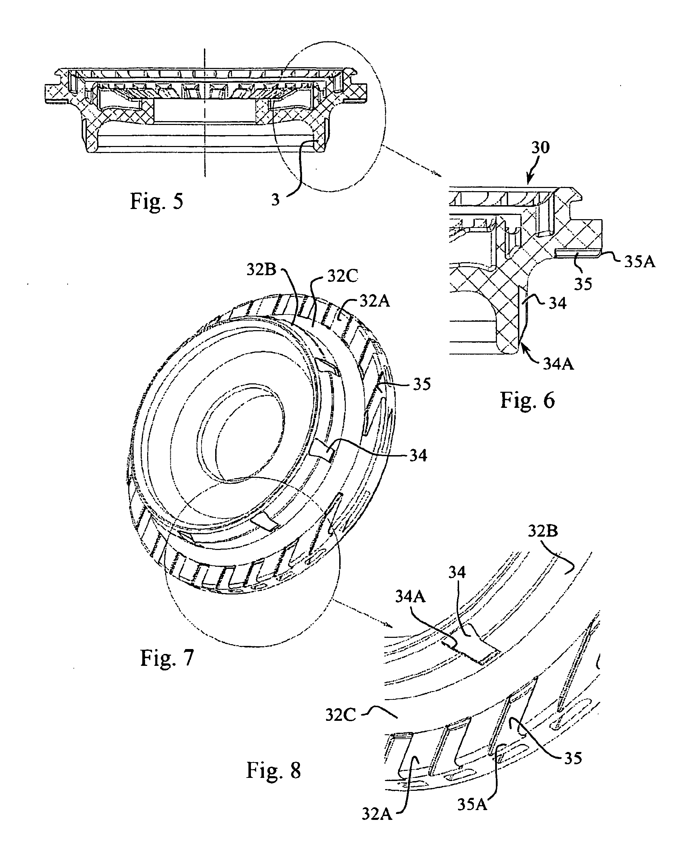

Un deuxième mode de réalisation de l'invention sera maintenant décrit à l'appui des figures 5 à 8. Les signes de références utilisés pour le premier mode de réalisation seront de nouveau utilisés pour désigner les parties identiques ou correspondantes du deuxième mode de réalisation. De la butée constituant le deuxième mode de réalisation, on n'a représenté sur les figures 5 à 8 que l'élément de support, le roulement et le capot étant identiques en tout point à ceux du premier mode de réalisation. L'élément de support du deuxième mode de réalisation se distingue de celui du premier mode de réalisation essentiellement par l'adjonction de rainures supplémentaires 35 parallèles les unes aux autres et débouchant sur la face plane annulaire 32A du support. Ces rainures 35 ont, comme les rainures 34 précédemment décrites, une section allant en s'évasant de la face plane 32A vers l'intérieur de l'élément de support, par exemple une section trapézoïdale en queue d'aronde. Elles débouchent latéralement en 35A à la périphérie de l'élément de support.

La réalisation des rainures 35 peut être obtenue lors du moulage de l'élément de support, par l'insertion dans le moule de deux tiroirs latéraux supplémentaires pourvus de broches trapézoïdales. On comprend ainsi que lors de l'injection du matériau élastomère constitutif de l'élément de filtration dans le moule contenant l'élément de support, le matériau élastomère va venir se loger dans l'ensemble des rainures 34 et 35 en y formant des nervures de profil trapézoïdal assurant une liaison mécanique de type à tenons et mortaises par imbrication des nervures et des rainures. Par ailleurs, l'élément de support du deuxième mode de réalisation est dépourvu d'orifices traversants 36, de sorte que l'élément filtrant correspondant ne comporte pas de lèvre supérieure 65 et de colonnes 64.

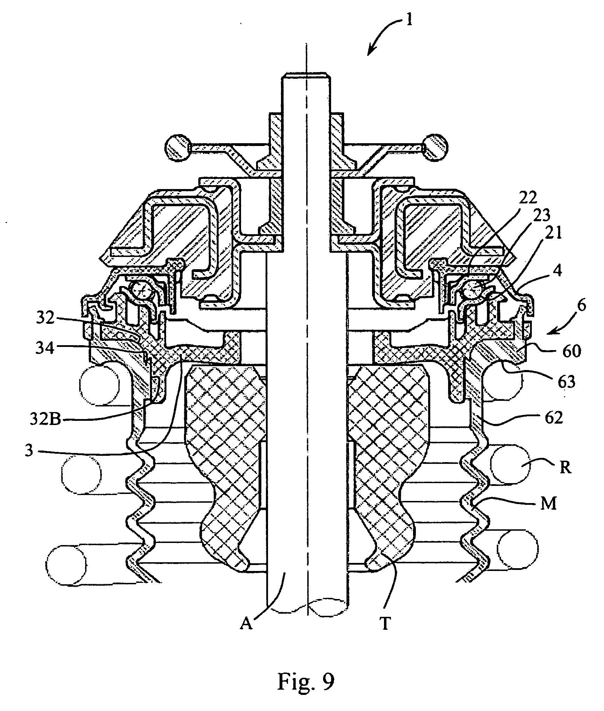

Sur la figure 9 est représentée une butée de suspension selon un troisième mode de réalisation de l'invention, plus particulièrement adaptée à une jambe de suspension comportant un amortisseur télescopique A disposé radialement à l'intérieur d'un ressort à boudin R, ainsi qu'un tampon amortisseur T. Ce mode de réalisation diffère du premier mode de réalisation décrit ci-dessus par référence aux figures 1 à 4 essentiellement par l'adjonction d'une manche en accordéon M, qui prolonge l'élément filtrant 6. sensiblement dans l'axe de l'amortisseur télescopique A et situé radialement entre l'amortisseur télescopique A et le ressort à boudin, afin de protéger l'amortisseur télescopique A et le tampon amortisseur T contre les projections de boue. Plus spécifiquement, l'élément filtrant 6 comporte une semelle 60 placée entre la surface de contact 32 de l'élément de support 3 et le ressort de suspension R, la semelle 60 formant au moins une surface d'appui 63 d'une spire terminale du ressort de suspension R. La semelle 60 se raccorde à une partie en forme de manchon 62 de l'élément filtrant 6, enserrant la face cylindrique 32B de l'élément de support, qui se prolonge par la manche en accordéon M disposée radialement entre l'amortisseur télescopique et le ressort R, et s'étendant de préférence sur toute la longueur de l'amortisseur télescopique. Pour le reste, ce mode de réalisation est identique au premier mode de réalisation, et l'on se reportera utilement à la description détaillée ci-dessus, pour les éléments de la figure portant les numéros identiques. En particulier, Le support 3 présente, à partir de sa face cylindrique 32B de contact avec l'élément filtrant 6, des rainures 34 en queue d'aronde, qui s'étendent parallèlement à l'axe géométrique de symétrie de la face cylindrique 32B et assurent une fixation positive de l'élément filtrant au support.

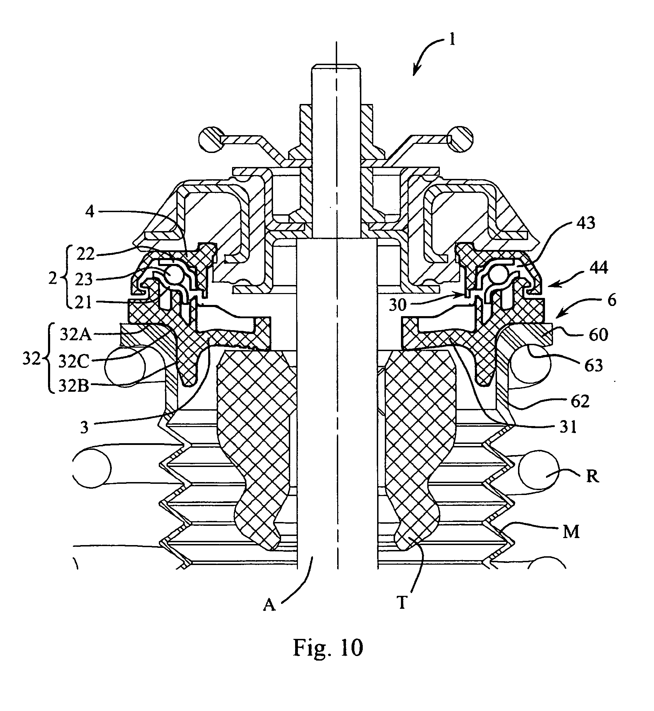

Sur la figure 10 est représentée une variante de réalisation de la figure 9, également développée pour une jambe de suspension comportant un ressort à boudin R, un amortisseur télescopique A et le cas échéant un tampon amortisseur T. La butée de suspension 1 représentée sur la figure 10 comporte un roulement 2, un élément de support 3 réalisé dans un matériau plastique ou composite rigide, un capot supérieur 4 et un élément filtrant 6 réalisé dans un matériau élastomère.

Le roulement 2 est constitué d'une rondelle inférieure 21 et d'une rondelle supérieure 22 entre lesquelles sont placés des corps roulants 23. Les rondelles 21, 22 sont réalisées par exemple par emboutissage d'une tôle. Le capot et l'élément de support forment ensemble une cavité 43 de logement du roulement 2, la rondelle supérieure 22 étant en appui direct avec le capot alors que la rondelle inférieure 21 est en appui direct sur l'élément de support 3.

Il n'existe préférentiellement aucun contact mécanique direct entre l'élément de support 3 et le capot 4, un tel contact risquant d'induire des frottements et une transmission des vibrations dommageables pour les performances de la butée 1. L'élément de support 3 forme avec le capot supérieur 4 une perte de charge 44 à l'entrée de la cavité 43, protégeant le roulement 2 vis-à-vis d'éventuelles projections.

L'élément de support 3 comporte au moins une région 30 sur une partie de laquelle la rondelle inférieure 21 du roulement 2 est en appui, une surface 31 d'arrêt et de confinement du tampon amortisseur T, et une surface de contact 32 avec l'élément filtrant 6, cette surface étant composée d'une face plane annulaire 32A, d'une face essentiellement cylindrique 32B et d'une zone de raccord 32C. L'élément filtrant 6 est fixé à l'élément de support 3 au niveau de la surface de contact 32 par tout moyen appropriés, par exemple par collage et/ou adhérisation physico-chimique, avec le cas échéant des reliefs complémentaires de verrouillage, qui ne sont toutefois pas un élément essentiel de cette variante.

L'élément filtrant 6 comporte une semelle 60 placée entre la surface de contact 32 de l'élément de support 3 et le ressort de suspension R, la semelle 60 formant au moins une surface d'appui 63 d'une spire terminale du ressort de suspension R. La semelle 60 se raccorde à une partie en forme de manchon 62 de l'élément filtrant 6, enserrant la face cylindrique 32B de l'élément de support, qui se prolonge par une manche en accordéon M disposée radialement entre l'amortisseur télescopique A et le ressort R, et s'étendant de préférence sur toute la longueur de l'amortisseur télescopique A.

Les efforts exercés par le ressort de suspension R sont transmis au roulement 2 par l'élément de support 3 via la semelle 60 de l'élément filtrant, dont l'épaisseur permet la filtration des vibrations du ressort de suspension R. Les efforts exercés par l'amortisseur télescopique et le tampon amortisseur sont transmis au roulement 2 par l'élément de support 3.

## Revendications

1. Butée (1) pour une jambe de suspension pourvue d'un ressort à boudin (R), la butée (1) comprenant
- un palier (2) comprenant au moins une rondelle inférieure (21) et une rondelle supérieure (22), et
- une pièce d'appui, comportant :
- un élément de support (3) rigide en contact avec la rondelle inférieure (21), pour transmettre à la rondelle inférieure (21) les efforts exercés par le ressort à boudin (R), et
- un élément filtrant (6) en matériau élastomère, interposé entre le ressort (R) et l'élément de support (3),
**caractérisée en ce que** l'élément de support (3) comporte au moins une rainure longiligne (34,35) s'ouvrant à partir d'une face (32A, 32B) de l'élément de support vers l'intérieur de l'élément de support, la rainure (34,35) ayant une extrémité longitudinale ouverte (34A,35A), et ayant en coupe transversale des parois latérales s'évasant à partir de la face (32B) de l'élément de support (3) vers le fond de la rainure, l'élément filtrant (6) étant en contact avec la face (32B) de l'élément de support (3) et comportant au moins un relief (61) remplissant la rainure (34, 35) de l'élément de support (3) en assurant un verrouillage mutuel positif entre l'élément filtrant (6) sur l'élément de support (3).

2. Butée (1) selon la revendication 1, **caractérisée en ce que** la rainure (34,35) a en coupe transversale un profil en queue d'aronde.

3. Butée (1) selon l'une ou l'autre des revendications 1 ou 2, **caractérisée en ce que** l'élément de support (3) est en matériau plastique ou composite.

4. Butée (1) selon l'une quelconque des revendications précédentes, **caractérisée en ce que** l'élément de support (3) comporte une pluralité de rainures longilignes (34,35) parallèles s'ouvrant à partir d'au moins une face (32A,32B) de l'élément de support vers l'intérieur de l'élément de support, chaque rainure (34,35) ayant une extrémité longitudinale ouverte et ayant en coupe transversale des parois latérales s'évasant à partir de la face (32A,32B) de l'élément de support (3) vers l'intérieur de l'élément de support, l'élément filtrant (6) étant en contact avec la face de l'élément de support et comportant une pluralité de reliefs (61) remplissant la pluralité de rainures (34, 35) de l'élément de support (3) en assurant un verrouillage mutuel positif entre l'élément filtrant (6) sur l'élément de support (3).

5. Butée (1) selon l'une quelconque des revendications précédentes, **caractérisée en ce que** la face (35) de l'élément de support (3) est plane.

6. Butée (1) selon l'une quelconque des revendications 1 à 5, **caractérisée en ce que** la face (32B) de l'élément de support (3) est cylindrique.

7. Butée (1) selon l'une quelconque des revendications 1 à 6, **caractérisée en ce qu'**elle comporte en outre un capot supérieur (4) en appui sur la rondelle supérieure (22) et formant avec l'élément de support (3) une cavité (43) de logement et de maintien du roulement (2).

8. Butée selon la revendication 7, **caractérisée en ce qu'**elle comporte en outre une lèvre annulaire (65) faisant saillie dans la cavité (43), constituée dans la matière de l'élément filtrant (6) et reliée à l'élément filtrant (6) par au moins un pont de matière remplissant un orifice traversant (36) l'élément de support (3) et débouchant dans la cavité (43).

9. Butée (1) selon la revendication 8, **caractérisée en ce que** la lèvre (65) vient au contact du capot supérieur (4).

10. Butée (1) selon la revendication 8, **caractérisée en ce que** la cavité (43) comporte une perte de charge (44) d'entrée, la lèvre (65) venant au contact du capot (4) dans la perte de charge d'entrée (44).

11. Butée (1) selon l'une quelconque des revendications précédentes, **caractérisée en ce que** le palier comporte des corps roulants (23) placés entre les rondelles (21,22).

12. Butée (1) selon l'une quelconque des revendications précédentes, **caractérisée en ce que** l'élément filtrant comporte un prolongement axial en accordéon constituant une manche de protection d'un amortisseur télescopique (A).

13. Jambe de suspension comportant un ressort à boudin (R), et une butée (1) selon l'une quelconque des revendications précédentes.

## Claims

1. A bump stop (1) for a MacPherson strut provided with one helical spring (R), the bump stop (1) comprising
a bearing (2) comprising at least a lower washer (21) and an upper washer (22), and
a bearing portion, comprising:
- a rigid support member (3) contacting the lower washer (21), to transmit to the lower washer (21) the loads exerted by the helical spring (R),
- a filtering member (6) made from an elastomeric material, interposed between the helical spring (R) and the support member (3),
**characterized in that** the support member (3) comprises at least a slender groove (34, 35) opening from a face (32A, 32B) of the support member towards the interior of the support member, the groove (34, 35) having an open longitudinal end (34A, 35A), and having in transverse cross-section side walls flaring from the face (32B) of support member (3) towards the bottom of the groove, the filtering member (6) being in contact with the face (32B) of the support member (3) and comprising at least a protrusion (61) filling the groove (34, 35) of the support member (3) by securing a positive interlocking between the filtering member (6) on the support member (3).

2. A bump stop (1) according to claim 1, **characterized in that** in transverse cross section the profile of the groove (34, 35) is dovetail shaped.

3. A bump stop (1) according to one of claims 1 or 2, **characterized in that** the support member (3) is made from plastic or composite material.

4. A bump stop (1) according to any one of the preceding claims, **characterized in that** the support member (3) comprises a plurality of parallel, slender grooves (34, 35) opening from at least a face (32A, 32B) of the support member towards the interior of the support member, each groove (34, 35) having an open longitudinal end and having in transverse cross section side walls flaring from the face (32A, 32B) of the support member (3) towards the interior of the support member, the filtering member (6) being in contact with the face of the support member and comprising a plurality of protrusions (61) filling the plurality of grooves (34, 35) of the support member (3) by securing a positive interlocking between the filtering member (6) on the support member (3).

5. A bump stop (1) according to any one of the preceding claims, **characterized in that** the face (35) of the support member (3) is planar.

6. A bump stop (1) according to any one of claims 1 to 5, **characterized in that** the face (32B) of the support member (3) is cylindrical.

7. A bump stop (1) according to any one of claims 1 to 6, **characterized in that** it further comprises an upper cover (4) bearing on the upper washer (22) and forming with the support member (3) a cavity (43) for accommodating and holding the bearing (2).

8. A bump stop according to claim 7, **characterized in that** it further comprises an annular lip (65) protruding in the cavity (43), made from the material of the filtering member (6) and connected to the filtering member (6) by at least a material bridge filling an aperture (36) traversing the support member (3) and terminating in the cavity (43).

9. A bump stop according to claim 8, **characterized in that** the lip (65) contacts the upper cover (4).

10. A bump stop (1) according to claims 8, **characterized in that** the cavity (43) comprises an input head loss (44), the lip (65) contacting the cover (4) in the input head loss (44).

11. A bump stop (1) according to any one of the preceding claims, **characterized in that** the bearing comprises rolling bodies (23) positioned between the washers (21, 22).

12. A bump stop (1) according to any one of the preceding claims, **characterized in that** the filtering member comprises an accordion-shaped axial extension composing a shielding sleeve for a telescopic shock absorber (A).

13. A MacPherson strut comprising a helical spring (R) and a bump stop (1) according to any one of the preceding claims.

## Patentansprüche

1. Anschlag (1) für ein Aufhängebein, das mit einer Sprungfeder (R) versehen ist, wobei der Anschlag (1) Folgendes umfasst:
- ein Lager (2), das zumindest eine untere Unterlegscheibe (21) und eine obere Unterlegscheibe (22) umfasst, und
- ein Auflageteil, das folgendes umfasst:
-- ein festes Stützelement (3), das Kontakt mit der unteren Unterlegscheibe (21) hat, um der unteren Unterlegscheibe (21) die von der Sprungfeder (R) ausgeübten Beanspruchungen zu übertragen, und
-- ein Filterelement (6) aus Elastomer, das zwischen der Feder (R) und dem Stützelement (3) angeordnet ist,
**dadurch gekennzeichnet, dass** das Stützelement (3) zumindest eine längliche Nut (34, 35) umfasst, die sich von einer Fläche (32A, 32B) des Stützelements zum Inneren des Stützelements öffnet, wobei die Nut (34, 35) ein offenes longitudinales Ende (34A, 35A) aufweist, und im Querschnitt Seitenwände aufweist, die sich ab der Fläche (32B) des Stützelements (3) zum Boden der Nut weiten, wobei das Filterelement (6) Kontakt mit der Fläche (32B) des Stützelements (3) hat und zumindest einen Vorsprung (61) umfasst, der die Nut (34, 35) des Stützelements (3) füllt, wobei der Vorsprung eine positive gegenseitige Verriegelung zwischen dem Filterelement (6) auf dem Stützelement (3) sichert.

2. Anschlag (1) nach Anspruch 1, **dadurch gekennzeichnet, dass** die Nut (34, 35) im Querschnitt ein Schwalbenschwanz-Profil aufweist.

3. Anschlag (1) nach einem der Ansprüche 1 oder 2, **dadurch gekennzeichnet, dass** das Stützelement (3) aus Kunststoff oder Verbundmaterial ist.

4. Anschlag (1) nach einem der vorhergehenden Ansprüche, **dadurch gekennzeichnet, dass** das Stützelement (3) mehrere parallele längliche Nuten (34, 35) umfasst, die sich von zumindest einer Fläche (32A, 32B) des Stützelements zum Inneren des Stützelements öffnen, wobei jede Nut (34, 35) ein offenes longitudinales Ende hat und im Querschnitt Seitenwände aufweist, die sich ab der Fläche (32A, 32B) des Stützelements (3) zum Inneren des Stützelements weiten, wobei das Filterelement (6) Kontakt mit der Fläche des Stützelements hat und eine Vielzahl an Vorsprünge (61) umfasst, die die Vielzahl an Nuten (34, 35) des Stützelements (3) füllen, wobei sie eine positive gegenseitige Verriegelung zwischen dem Filterelement (6) auf dem Stützelement (3) sichern.

5. Anschlag (1) nach einem der vorhergehenden Ansprüche, **dadurch gekennzeichnet, dass** die Fläche (35) des Stützelements (3) eben ist.

6. Anschlag (1) nach einem der Ansprüche 1 bis 5, **dadurch gekennzeichnet, dass** die Fläche (32B) des Stützelements (3) zylindrisch ist.

7. Anschlag (1) nach einem der Ansprüche 1 bis 6, **dadurch gekennzeichnet, dass** er des Weiteren eine obere Kappe (4) umfasst, die sich auf die obere Unterlegscheibe (22) stützt und mit dem Stützelement (3) einen Hohlraum (43) für die Aufnahme und den Halt des Lagers (2) bildet.

8. Anschlag nach Anspruch 7, **dadurch gekennzeichnet, dass** er des Weiteren eine Ringlippe (65) umfasst, die in den Hohlraum (43) hineinragt, der im Material des Filterelements (6) gebildet ist und mit dem Filterelement (6) durch zumindest eine Materialbrücke verbunden ist, die ein Loch (36) füllt, das das Stützelement (3) durchquert und in den Hohlraum (43) mündet.

9. Anschlag (1) nach Anspruch 8, **dadurch gekennzeichnet, dass** die Lippe (65) in Kontakt mit der oberen Kappe (4) kommt.

10. Anschlag (1) nach Anspruch 8, **dadurch gekennzeichnet, dass** der Hohlraum (43) einen Eingangslastverlust (44) umfasst, wobei die Lippe (65) im Eingangslastverlust (44) in Kontakt mit der Kappe (4) kommt.

11. Anschlag (1) nach einem der vorhergehenden Ansprüche, **dadurch gekennzeichnet, dass** das Lager Rollkörper (23) umfasst, die zwischen den Unterlegscheiben (21, 22) angeordnet sind.

12. Anschlag (1) nach einem der vorhergehenden Ansprüche, **dadurch gekennzeichnet, dass** das Filterelement eine harmonikaartig gefaltete Axialverlängerung umfasst, die einen Ärmelschützer eines Teleskopstoßdämpfers (A) bildet.

13. Aufhängebein mit einer Sprungfeder (R) und einem Anschlag (1) nach einem der vorhergehenden Ansprüche.
